# EUROPEAN PATENT APPLICATION

(11) **EP 3 249 721 A1**
(43) Date of publication of application: **29.11.2017**
(21) Application number: 17172903.1
(22) Date of filing: 24.05.2017
(51) Int. Cl.: H01M 4/131, H01M 4/525, H01M 10/0525, H01M 4/62, H01M 4/02

(54) **POSITIVE ELECTRODE FOR RECHARGEABLE LITHIUM BATTERY AND RECHARGEABLE LITHIUM BATTERY INCLUDING SAME**

(30) Priority: 27.05.2016 KR 20160065722
(71) Applicant: Samsung SDI Co., Ltd., Yongin-si, Gyeonggi-do 17084 (KR)
(72) Inventor: KIM, Ji-Hyun, 17084 Gyeonggi-do (KR); KIM, Chang-Wook, 17084 Gyeonggi-do (KR)
(74) Representative: Mounteney, Simon James

(57) **Abstract**

A positive electrode for a rechargeable lithium battery and a rechargeable lithium battery including the same are provided. The positive electrode includes a current collector and a positive active material layer disposed on the current collector, wherein the positive active material layer includes a positive active material and a Fe-containing oxide, and the Fe-containing oxide is included in an amount of about 0.015 parts by weight to about 8.5 parts by weight based on 100 parts by weight of the positive active material.

## Description

### BACKGROUND

### 1. Field

A positive electrode for a rechargeable lithium battery and a rechargeable lithium battery including the same are disclosed.

### 2. Description of the Related Art

A rechargeable lithium battery has recently drawn attention as a power source for small portable electronic devices. The rechargeable lithium battery uses an organic electrolyte solution and thereby, has twice or more as higher a discharge voltage than a conventional battery using an alkali aqueous solution and accordingly, has high energy density.

As for a positive active material of a rechargeable lithium battery, a lithium-transition metal oxide having a structure capable of intercalating lithium ions, such as LiCoO₂ LiMn₂O₄, LiNi₁₋ₓCoₓO₂ (0 < x < 1), and the like has been used.

As for a negative active material, various carbon-based negative active materials such as artificial graphite, natural graphite, and hard carbon, which intercalate and deintercalate lithium ions, and oxide negative active materials such as tin oxide, lithium vanadium-based oxide, and the like have been used.

### SUMMARY

An embodiment provides a positive electrode for a rechargeable lithium battery having an increased lithium utilization ratio.

Another embodiment provides a rechargeable lithium battery having high capacity due to the positive electrode.

According to an embodiment, a positive electrode for a rechargeable lithium battery includes a current collector and a positive active material layer disposed on the current collector, wherein the positive active material layer includes a positive active material and a Fe-containing oxide, and the Fe-containing oxide is included in an amount of about 0.015 parts by weight to about 8.5 parts by weight based on 100 parts by weight of the positive active material.

The Fe-containing oxide may be Li₅FeO₄, LiFeO₂, LiFe₅O₈, or a combination thereof.

The positive active material layer may include about 0.08 parts by weight to about 4.0 parts by weight of the Fe-containing oxide per 100 parts by weight of the positive active material.

A particle diameter (D50) of the Fe-containing oxide may range from about 0.5 µm to about 3 µm.

The positive active material may be a compound represented by Chemical Formula 1.

[Chemical Formula 1] LiₐCO_{1-b}M_{b}O₂

In Chemical Formula 1, 0.90 ≤ a ≤1.8, 0 ≤ by ≤ 0.5, and M is selected from Al, Ni, Co, Mn, Cr, Fe, Mg, Sr, V, a rare earth element, and a combination thereof.

According to another embodiment, a rechargeable lithium battery includes a positive electrode including a positive active material and Fe, a negative electrode including a negative active material, and an electrolyte, wherein a content of the Fe ranges from about 0.005 wt% to about 3 wt% based on 100 wt% of the positive active material.

The rechargeable lithium battery includes a positive electrode including a current collector and a positive active material layer disposed on the current collector, wherein the positive active material layer includes a positive active material and a Fe-containing oxide, and the Fe-containing oxide is included in an amount of about 0.015 parts by weight to about 8.5 parts by weight based on 100 parts by weight of the positive active material, and the rechargeable lithium battery is manufactured by performing 1 to 3 times charges and discharges at about 0.05 C to about 0.1C.

The negative active material may be a carbon-based negative active material.

At least some of the above and other features of the invention are set out in the claims.

Other embodiments are included in the following detailed description.

The positive electrode for a rechargeable lithium battery according to an embodiment exhibits an improved lithium utilization ratio and provides a rechargeable lithium battery having high capacity.

### BRIEF DESCRIPTION OF THE DRAWINGS

FIG. 1 is a schematic view showing a structure of a positive active material according to an embodiment.
FIG. 2 is a graph showing capacity utilization ratio of the cells according to Examples 1 to 10 and Comparative Examples 1, 4, and 5.

### DETAILED DESCRIPTION

Hereinafter, embodiments are described in detail. However, this disclosure is not limited to these embodiments.

A positive electrode for a rechargeable lithium battery according to an embodiment includes a current collector and a positive active material layer disposed on the current collector, wherein the positive active material layer includes a positive active material and a Fe-containing oxide, and the Fe-containing oxide is included in an amount of about 0.015 parts by weight to about 8.5 parts by weight based on 100 parts by weight of the positive active material.

For example, the Fe-containing oxide may be included in an amount of about 0.5 parts by weight to about 8.5 parts by weight, about 0.8 parts by weight to about 8.3 parts by weight, about 1.0 parts by weight to about 8.0 parts by weight, about 1.0 parts by weight to about 7.5 parts by weight, about 1.0 parts by weight to about 7.0 parts by weight, about 1.0 parts by weight to about 6.5 parts by weight, about 1.0 parts by weight to about 6.3 parts by weight, about 1.0 parts by weight to about 6.0 parts by weight, about 1.0 parts by weight to about 5.5 parts by weight, about 1.5 parts by weight to about 5.5 parts by weight, about 1.6 parts by weight to about 5.5 parts by weight, about 1.6 parts by weight to about 5.0 parts by weight, about 1.6 parts by weight to about 4.9 parts by weight, about 2.0 parts by weight to about 4.5 parts by weight, about 2.0 parts by weight to about 4.0 parts by weight, about 2.5 parts by weight to about 4.0 parts by weight, about 2.7 parts by weight to about 4.0 parts by weight, about 2.7 parts by weight to about 3.7 parts by weight, about 2.9 parts by weight to about 3.6 parts by weight, or about 3.0 parts by weight to about 3.5 parts by weight (all based on 100 parts by weight of the positive active material).

The positive active material layer may include the Fe-containing oxide in an amount of about 0.08 parts by weight to about 4.0 parts by weight based on 100 parts by weight of the positive active material.

For example, the positive active material layer may include the Fe-containing oxide in an amount of about 0.08 parts by weight to about 4.0 parts by weight, about 0.5 parts by weight to about 4.0 parts by weight, about 0.8 parts by weight to about 4.0 parts by weight, about 1.0 parts by weight to about 4.0 parts by weight, about 1.5 parts by weight to about 4.0 parts by weight, or about 1.6 parts by weight to about 4.0 parts by weight (all based on 100 parts by weight of the positive active material).

In general, when a battery is manufactured by using lithium cobalt-based oxide as a positive active material and a carbon-based material such as graphite as a negative active material, the battery is designed to have initial charge and discharge efficiency based on the initial efficiency of the negative electrode as the initial efficiency of a negative electrode is lower than that of a positive electrode, but in order to obtain maximum battery capacity, the positive and negative electrodes are designed to have similar irreversible capacity. In other words, battery capacity may be obtained by subtracting the maximum irreversible capacity of the positive or negative electrode from the charge capacity of the positive electrode. An aim of the present invention is to decrease the irreversible capacity of the positive electrode.

A part of Li included in the positive active material participates in forming a SEI (solid electrolyte interface) film on the surface of the negative electrode during charge and discharge and is converted into irreversible Li, which no more participates in a charge and discharge reaction. Accordingly, the battery capacity may be decreased. The Fe-containing oxide according to an embodiment is a compound playing a role of a sacrifice positive electrode compensating the irreversible Li and is thus decomposed during a formation process and providing Li but not participating in the following charge and discharge process. For providing Li, when Li₅FeO₄ is exemplified as the Fe-containing oxide, Li₅FeO₄ may be decomposed between 3.7 V to 3.9 V relative to Li and provide four Li's. When the Fe-containing oxide is used within the content range, the Fe-containing oxide may sufficiently compensate the irreversible Li and thus increase a utilization ratio of the positive active material. When the Fe-containing oxide is used less than the content range, the irreversible Li may not be sufficiently compensated, but when the Fe-containing oxide is used in an excessive amount, a utilization ratio of the positive electrode may be rather decreased.

When Li₆MnO₄ is used instead of the Fe-containing oxide, the Li₆MnO₄ has remarkably lower electrochemical characteristics than the Fe-containing oxide and thus may not obtain appropriately a desired effect, and when Li₆CoO₄ is used, the Li₆CoO₄ is decomposed during charge and discharge and forms Li₂O and CoO, and the CoO is dissolved into Co²⁺ in an electrolyte and elutes Co at the negative electrode and thus inappropriately deteriorates battery characteristics.

The Fe-containing oxide may be Li₅FeO₄, LiFeO₂, LiFe₅O₈, or a combination thereof, and herein, the Li₅FeO₄ is more desired as the Li₅FeO₄ may provide more Li and resultantly compensate more irreversible Li than the others during a formation process and thus enhance an effect of the sacrifice positive electrode.

A particle diameter (D50) of the Fe-containing oxide may range from about 0.5 µm to about 3 µm. For example, the particle diameter (D50) of the Fe-containing oxide may range from about 1.0 µm to about 3 µm, about 1.5 µm to about 2.5 µm, about 1.8 µm to about 2.4 µm, or about 1.9 µm to about 2.1 µm (e.g. about 2.0 µm). When the Fe-containing oxide has a particle diameter (D50) within the range, density of an active mass may much improved during manufacture of a positive electrode. In the specification, D50 may be determined using a laser diffraction technique with PSA (Mastersizer 2000, Malvern instruments) equipment.

In the present specification, the 'active mass' indicates a mixture of an active material, a binder, and optionally a conductive material. The mixture is mixed in a solvent to obtain a slurry type active material composition, and this active material composition is coated on a current collector and then, dried to form an active material layer, which is called to be an active mass layer. The definition of the active mass and the active mass layer is widely known and thus will not be illustrated in detail.

In addition, the density of an active mass indicates an active mass weight per unit volume of an electrode.

As used herein, when a definition is not otherwise provided, a particle diameter (D50) indicates a particle where an accumulated volume is about 50 volume% in a particle distribution.

The positive active material may be a compound represented by Chemical Formula 1.

[Chemical Formula 1] LiₐCo_{1-b}M_{b}O₂

In Chemical Formula 1, 0.90 ≤ a ≤1.8, 0 ≤ by ≤ 0.5, and M is selected from Al, Ni, Co, Mn, Cr, Fe, Mg, Sr, V, a rare earth element, and a combination thereof.

When a compound represented by the above Chemical Formula 1 is used as a positive active material, more irreversible Li may be generated, and the Fe-containing oxide may be further used for the positive electrode to maximize an effect of compensating the irreversible Li.

An average particle diameter (D50) of the positive active material may range from about 15 µm to about 23 µm (e.g. about 20 µm). When the positive active material has an average particle diameter (D50) within the range, this positive active material may increase active mass density of the positive electrode and resultantly, much increase energy density of a battery.

The positive active material layer may further include a binder and a conductive material. When the positive active material layer further includes the binder and the conductive material, the positive active material and the Fe-containing oxide may be used in an amount of 90 wt% to 98 wt% based on the total amount of the positive active material layer. Herein, the Fe-containing oxide may be mixed in an amount of about 0.015 parts by weight to about 8.5 parts by weight based on 100 parts by weight of the positive active material. The Fe-containing oxide may also be mixed in any of the other amounts specified herein.

A content of the binder may be about 1 wt% to about 5 wt% based on the total amount of the positive active material layer and a content of the conductive material may be about 1 wt% to about 5 wt% based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to provide electrode conductivity. Any electrically conductive material may be used as a conductive material unless it causes a chemical change. Examples of the conductive material may be a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may be Al, but is not limited thereto.

Another embodiment provides a rechargeable lithium battery including a positive electrode including a positive active material and Fe, negative electrode including a negative active material, and an electrolyte. Herein, a content of the Fe ranges from about 0.005 wt% to about 3 wt%, for example about 0.01 wt% to about 3 wt%, about 0.02 wt% to about 3 wt%, about 0.02 wt% to about 2 wt%, or about 0.02 wt% to about 1 wt% based on 100 wt% of the positive active material.

The rechargeable lithium battery may be manufactured by using the aforementioned positive electrode, that is, a positive electrode including a current collector and a positive active material layer formed on the current collector and including the positive active material and the Fe-containing oxide, wherein the Fe-containing oxide is used in an amount of about 0.015 parts by weight to about 8.5 parts by weight based on 100 parts by weight of the positive active material, and by performing 1 to 3 times charges and discharges at about 0.05 C to about 0.1 C.

When the battery manufactured by using the positive electrode including the Fe-containing oxide is 1 to 3 times charged and discharged at about 0.05 C to about 0.1 C (*e.g.* 1, 2 or 3 times charged and discharged at about 0.05 C to about 0.1 C), that is, through a formation process, the Fe-containing oxide may be decomposed and remain as Fe in a final battery.

The negative electrode includes a current collector and a negative active material layer disposed on the current collector and including a negative active material.

The negative active material includes a material that reversibly intercalates/deintercalates lithium ions, a lithium metal, a lithium metal alloy, a material being capable of doping/dedoping lithium, or a transition metal oxide.

The material that can reversibly intercalate/deintercalate lithium ions includes a carbon material. The carbon material may be any generally-used carbon-based negative active material in a lithium ion rechargeable battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes lithium and an element selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may include Si, a Si-C composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition element, a rare earth element, and a combination thereof, and not Si), Sn, SnO₂, a Sn-R alloy (wherein R is an element selected from an alkali metal, an alkaline-earth metal, a Group 13 element, a Group 14 element, a Group 15 element, a Group 16 element, a transition element, a rare earth element, and a combination thereof, and not Sn), and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The transition metal oxide includes vanadium oxide, lithium vanadium oxide, and the like.

In an embodiment, when the carbon-based negative active material is used as a negative active material, an effect of maximizing battery capacity may be maximized by using the positive electrode according to an embodiment to maximize a Li utilization ratio.

In the negative active material layer, the negative active material may be used in an amount of about 95 wt% to about 99 wt% based on the entire weight of the negative active material layer.

In an embodiment, the negative active material layer includes a binder and optionally a conductive material. The negative active material layer may include about 1 wt% to about 5 wt% of a binder based on the total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder includes polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from an ethylenepropylene copolymer, polyepichlorohydrin, polyphosphazene, polyacrylonitrile, polystyrene, ethylenepropylenediene copolymer, polyvinylpyridine, chlorosulfonatedpolyethylene, latex, a polyester resin, an acrylic resin, a phenolic resin, an epoxy resin, polyvinyl alcohol, and a combination thereof.

When the water-soluble binder is used as a negative electrode binder, a cellulose-based compound may be further used to provide viscosity as an agent for increasing viscosity. The cellulose-based compound includes one or more of carboxymethyl cellulose, hydroxypropylmethyl cellulose, methyl cellulose, or alkali metal salts thereof. The alkali metal may be Na, K, or Li. The agent for increasing viscosity may be included in an amount of about 0.1 to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The negative electrode and the positive electrode may be respectively manufactured by mixing each active material, a conductive material and a binder in a solvent to prepare an active material composition, and coating the composition on a current collector. The electrode manufacturing method is well known, and thus is not described in detail in the present specification. The solvent includes N-methylpyrrolidone and the like, but is not limited thereto. When the negative electrode uses the water-soluble binder, the solvent for preparing a negative active composition may be water.

The electrolyte includes a non-aqueous organic solvent and a lithium salt.

The non-aqueous organic solvent serves as a medium for transmitting ions taking part in the electrochemical reaction of a battery.

The organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethylpropionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. The ketone-based solvent may be cyclohexanone, and the like. The alcohol based solvent may include ethyl alcohol, isopropyl alcohol, and the like, and the aprotic solvent may include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, and the like.

The organic solvent may be used singularly or in a mixture. When the organic solvent is used in a mixture, the mixture ratio may be controlled in accordance with a desirable battery performance.

The carbonate-based solvent may include a mixture with a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 2.

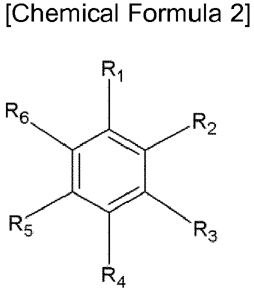

In Chemical Formula 2, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate, or ethylene carbonate-based compound represented by Chemical Formula 3, to improve cycle life.

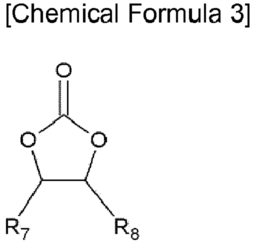

In Chemical Formula 3, R₇ and R₈ are the same or different and may be each independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like.

The amount of the additive for improving cycle life may be flexibly used within an appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, e.g. an integer of 1 to 20), LiCl, Lil, and LiB(C₂O₄)₂ (lithium bis(oxalato) borate; LiBOB). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

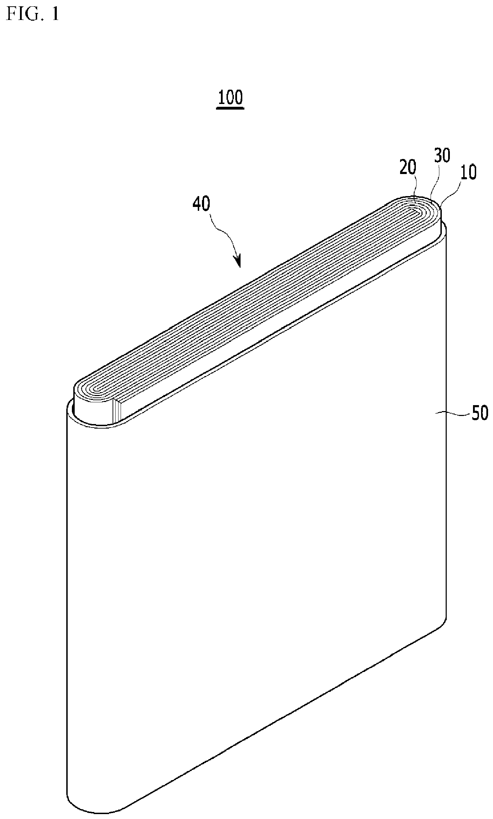

FIG. 1 is an exploded perspective view showing a rechargeable lithium battery according to an embodiment. The rechargeable lithium battery according to an embodiment is illustrated as a prismatic rechargeable lithium battery but is not limited thereto and may include variously-shaped batteries such as a cylindrical battery, a pouch battery, and the like.

Referring to FIG. 1, a rechargeable lithium battery 100 according to an embodiment includes an electrode assembly 40 manufactured by winding a separator 30 interposed between a positive electrode 10 and a negative electrode 20, and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

### (Preparation Example 1)

Li₂CO₃ and Co₃O₄ were mixed to have a Li:Co mole ratio of 1:1 in a final product, and this mixture was fired at 1100 °C under an air atmosphere for 10 hours to manufacture LiCoO₂.

This LiCoO₂ was pulverized to prepare a LiCoO₂ positive active material having an average particle diameter (D50) of 20 µm.

### (Preparation Example 2)

LiOH₊H₂O and Fe₂O₃ were mixed to have a Li:Fe mole ratio of 5:1 in a final product, and this mixture was fired at 700 °C under a N₂ atmosphere for 10 hours to manufacture Li₅FeO₄.

The Li₅FeO₄ was pulverized to prepare Li₅FeO₄ having an average particle diameter (D50) of 2 µm.

### (Example 1)

The LiCoO₂ positive active material according to Preparation Example 1 and the Li₅FeO₄ according to Preparation Example 2 were mixed in a ratio of 100 : 0.8 parts by weight. 96 wt% of the mixture, 2 wt% of polyvinylidene fluoride, and 2 wt% of ketjen black were mixed in an N-methyl pyrrolidone solvent to prepare positive active material slurry.

The positive active material slurry was coated on an Al current collector and then, dried and compressed to manufacture a positive electrode for a rechargeable lithium battery.

### (Example 2)

A positive electrode for a rechargeable lithium battery was manufactured according to the same method as Example 1 except for mixing the LiCoO₂ positive active material and the Li₅FeO₄ in a ratio of 100 : 1.6 parts by weight.

### (Example 3)

A positive electrode for a rechargeable lithium battery was manufactured according to the same method as Example 1 except for mixing the LiCoO₂ positive active material and the Li₅FeO₄ in a ratio of 100 : 4.9 parts by weight.

### (Example 4)

A positive electrode for a rechargeable lithium battery was manufactured according to the same method as Example 1 except for mixing the LiCoO₂ positive active material and the Li₅FeO₄ in a ratio of 100 : 8.3 parts by weight.

### (Example 5)

A positive electrode for a rechargeable lithium battery was manufactured according to the same method as Example 1 except for mixing the LiCoO₂ positive active material and the Li₅FeO₄ in a ratio of 100 : 3 parts by weight.

### (Example 6)

A positive electrode for a rechargeable lithium battery was manufactured according to the same method as Example 1 except for mixing the LiCoO₂ positive active material and the Li₅FeO₄ in a ratio of 100 : 3.5 parts by weight.

### (Example 7)

A positive electrode for a rechargeable lithium battery was manufactured according to the same method as Example 1 except for mixing the LiCoO₂ positive active material and the Li₅FeO₄ in a ratio of 100 : 4 parts by weight.

### (Example 8)

A positive electrode for a rechargeable lithium battery was manufactured according to the same method as Example 1 except for mixing the LiCoO₂ positive active material and the Li₅FeO₄ in a ratio of 100 : 5.5 parts by weight.

### (Example 9)

A positive electrode for a rechargeable lithium battery was manufactured according to the same method as Example 1 except for mixing the LiCoO₂ positive active material and the Li₅FeO₄ in a ratio of 100 : 6.3 parts by weight.

### (Example 10)

A positive electrode for a rechargeable lithium battery was manufactured according to the same method as Example 1 except for mixing the LiCoO₂ positive active material and the Li₅FeO₄ in a ratio of 100 : 7 parts by weight.

### (Comparative Example 1)

96 wt% of the LiCoO₂ positive active material according to Preparation Example 1, 2 wt% of polyvinylidene fluoride, and 2 wt% of ketjen black were mixed in an N-methyl pyrrolidone solvent to prepare positive active material slurry.

The positive active material slurry was coated on an Al current collector and then, dried and compressed to manufacture a positive electrode for a rechargeable lithium battery.

### (Comparative Example 2)

A positive electrode for a rechargeable lithium battery was manufactured according to the same method as Example 1 except for mixing the LiCoO₂ positive active material and the Li₅FeO₄ in a weight ratio of 100 : 17.65 parts by weight.

### (Comparative Example 3)

A positive electrode for a rechargeable lithium battery was manufactured according to the same method as Example 1 except for mixing the LiCoO₂ positive active material and the Li₅FeO₄ in a weight ratio of 100 : 11.9 parts by weight.

### (Comparative Example 4)

A positive electrode for a rechargeable lithium battery was manufactured according to the same method as Example 1 except for mixing the LiCoO₂ positive active material and the Li₅FeO₄ in a weight ratio of 100 : 9 parts by weight.

### (Comparative Example 5)

A positive electrode for a rechargeable lithium battery was manufactured according to the same method as Example 1 except for mixing the LiCoO₂ positive active material and the Li₅FeO₄ in a weight ratio of 100 : 10 parts by weight.

### Measurement of Fe Content

98 wt% of artificial graphite and 2 wt% of polyvinylidene fluoride were mixed in an N-methyl pyrrolidone solvent to prepare negative active material slurry.

The negative active material slurry was coated on a Cu current collector and then, dried and compressed to manufacture a negative electrode for a rechargeable lithium battery.

The negative electrode, each positive electrode according to Examples 1 to 4 and Comparative Examples 1 to 3, and an electrolyte solution were used to manufacture a rechargeable lithium battery cell. Herein, the electrolyte solution was prepared by dissolving 1.0 M LiPF₆ in a mixed solvent of ethylene carbonate and diethyl carbonate (7 : 3 of a volume ratio).

The rechargeable lithium battery cell was once charged and discharged at 0.1 C to perform a formation process. After the formation process, the Fe content included in each positive electrode was measured in an ICP (Inductively Coupled Plasma) method, and the results were converted into a unit of mol% and wt% and then, shown in Table 1.

**Table 1**

| | Fe Content (mol%) (wt%) |
|---|---|
| Example 1 | 0.495 mol% (0.3 wt%) |
| Example 2 | 1.015 mol% (0.58 wt%) |
| Example 3 | 2.983 mol% (1.8 wt%) |
| Example 4 | 4.871 mol% (3 wt%) |
| Comparative Example 1 | 0.008 mol% (0.001 wt%) |
| Comparative Example 2 | 14.92 mol% (10 wt%) |
| Comparative Example 3 | 6.910 mol% (4.3 wt%) |

| | |
|---|---|
| * Battery Characteristics Evaluation | |

After the formation process, each rechargeable lithium battery cell was once charged and discharged at 3.0 V to 4.55 V and 0.1 C, its charge and discharge capacity and initial coulombic efficiency (ICE, formation efficiency) were measured, and the results are shown in Table 2.

**Table 2**

| | Charge capacity (mAh/g) | Discharge capacity (mAh/g) | ICE (%) |
|---|---|---|---|
| Example 1 | 200 | 186 | 92.6 |
| Example 2 | 203 | 188 | 92.7 |
| Example 3 | 213 | 188 | 88.4 |
| Example 4 | 223 | 184 | 82.7 |
| Example 5 | 233 | 180 | 77.5 |
| Comparative Example 1 | 198 | 183 | 92.4 |
| Comparative Example 2 | 272 | 165 | 60.5 |

| | | | |
|---|---|---|---|
| * Utilization ratio Measurement of Positive Electrode | | | |

98 wt% of artificial graphite and 2 wt% of polyvinylidene fluoride were mixed in an N-methyl pyrrolidone solvent to prepare negative active material slurry.

The negative active material slurry was coated on a Cu current collector and then, dried and compressed to manufacture a negative electrode for a rechargeable lithium battery cell.

The negative electrode, each positive electrode according to Examples 1 to 10 and Comparative Examples 1, 4, and 5, and an electrolyte solution were used to manufacture a rechargeable lithium battery cell. Herein, the electrolyte solution was prepared by dissolving 1.0 M LiPF₆ in a mixed solvent of ethylene carbonate and diethyl carbonate (7 : 3 of a volume ratio).

The manufactured battery cells were used to measure a capacity utilization ratio.

The capacity utilization ratio was measured by charging the cells under a condition of 0.2 C, CC/CV (a constant current/constant voltage), and 4.45 V and then, measuring charge capacity, also, discharging the cells under a condition of 0.2 C, CC, and 3.0 V and then, measuring discharge capacity, and dividing the discharge capacity by the charge capacity.

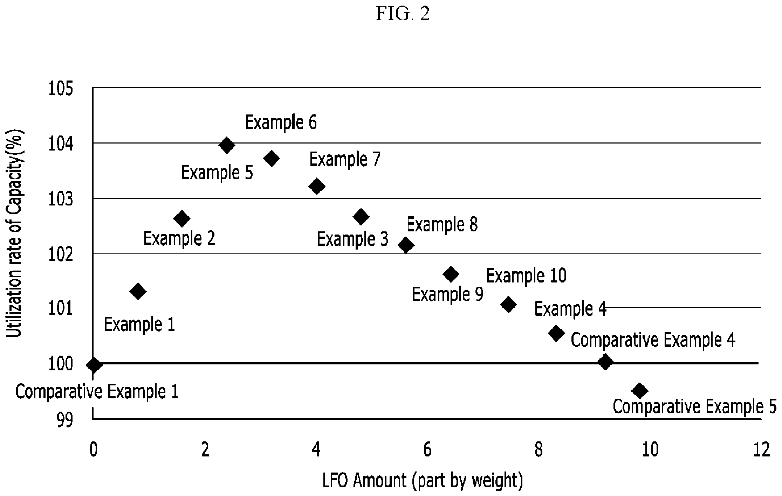

The results are shown in FIG. 2. In FIG. 2, the LFO content indicates a mixing ratio of the Li₅FeO₄ based on 100 parts by weight of the LiCoO₂ positive active material. As shown in FIG. 2, the cells using the positive electrodes according to Examples 1 to 10 using 0.8 to 8.3 parts by weight of the Li₅FeO₄ based on 100 parts by weight of the LiCoO₂ positive active material exhibited an excellent capacity utilization ratio compared with the cell using the positive electrode according to Comparative Example 1 using no Li₅FeO₄ and the cells using the positive electrodes Comparative Examples 4 and 5 using the Li₅FeO₄ in an excessive amount.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A positive electrode for a rechargeable lithium battery, comprising
a current collector; and
a positive active material layer disposed on the current collector,
wherein the positive active material layer includes a positive active material and a Fe-containing oxide, and the Fe-containing oxide is included in an amount of about 0.015 parts by weight to about 8.5 parts by weight based on 100 parts by weight of the positive active material.

2. A positive electrode according to claim 1, wherein the Fe-containing oxide is Li₅FeO₄, LiFeO₂, LiFe₅O₈, or a combination thereof.

3. A positive electrode according to claim 1 or claim 2, wherein the positive active material layer includes about 0.08 parts by weight to about 4.0 parts by weight of the Fe-containing oxide per 100 parts by weight of the positive active material.

4. A positive electrode according to any one of claims 1 to 3, wherein a particle diameter (D50) of the Fe-containing oxide ranges from about 0.5 µm to about 3 µm.

5. A positive electrode according to any one of claims 1 to 4, wherein the positive active material is a compound represented by Chemical Formula 1.
[Chemical Formula 1] LiₐCo_{1-b}M_{b}O₂
wherein, in Chemical Formula 1, 0.90 ≤ a ≤1.8, 0 ≤ by ≤ 0.5, and M is selected from Al, Ni, Co, Mn, Cr, Fe, Mg, Sr, V, a rare earth element, and a combination thereof.

6. A rechargeable lithium battery, comprising
a positive electrode including a positive active material and Fe;
a negative electrode including a negative active material; and
an electrolyte,
wherein a content of the Fe ranges from about 0.005 wt% to about 3 wt% based on 100 wt% of the positive active material.

7. A rechargeable lithium battery according to claim 6, wherein the rechargeable lithium battery comprises a positive electrode comprising a current collector and a positive active material layer disposed on the current collector, wherein the positive active material layer comprises a positive active material and a Fe-containing oxide, and the Fe-containing oxide is comprised in an amount of about 0.015 parts by weight to about 8.5 parts by weight based on 100 parts by weight of the positive active material, and the rechargeable lithium battery is manufactured by performing 1 to 3 times charges and discharges at about 0.05 C to about 0.1 C.

8. A rechargeable lithium battery according to claim 6 or claim 7, wherein the negative active material is a carbon-based negative active material.
